# EUROPÄISCHE PATENTSCHRIFT

(11) **EP 3 070 549 B1**
(45) Veröffentlichungstag und Bekanntmachung des Hinweises auf die Patenterteilung: **18.04.2018**
(21) Anmeldenummer: 16161139.7
(22) Anmeldetag: 18.03.2016
(51) Int. Cl.: G05B 15/02

(54) **BEDIENEINRICHTUNG, VERFAHREN ZUR BEDIENUNG WENIGSTENS EINES ELEKTRISCHEN GERÄTS**
OPERATING DEVICE AND METHOD FOR OPERATING AT LEAST ONE ELECTRICAL DEVICE
DISPOSITIF DE COMMANDE ET PROCÉDÉ DE COMMANDE D'AU MOINS UN APPAREIL ÉLECTRIQUE

(30) Priorität: 20.03.2015 DE 102015104218
(43) Veröffentlichungstag der Anmeldung: 21.09.2016
(73) Patentinhaber: BURY Sp. z o.o., 39-300 Mielec (PL)
(72) Erfinder: Bury, Henryk, 32584 Löhne (DE)
(74) Vertreter: Gerstein, Hans Joachim

(56) Entgegenhaltungen:
- DE-A1-102007 041 180
- US-A1- 2014 266 669
- US-B1- 6 377 858

## Beschreibung

Die Erfindung betrifft eine elektrische Bedieneinrichtung zur elektrischen Bedienung wenigstens eines elektrischen Geräts gemäß dem Oberbegriff des Anspruchs 1, ein entsprechendes Verfahren sowie ein Computerprogramm.

Eine gattungsgemäße Einrichtung und ein Verfahren sind aus der US 6,377,858 B1 bekannt.

Elektrische Geräte, bei denen derartige Bedieneinrichtungen häufig zum Einsatz kommen, sind beispielsweise Lampen oder elektrische Jalousien. Natürlich können derartige Bedieneinrichtungen aber auch für jedes andere elektrische Gerät eingesetzt werden.

Insbesondere Beleuchtungseinrichtungen, wie beispielsweise Außenlampen, und Außenjalousien und ähnliche elektrische Geräte haben den Effekt, dass bei einem Gebäude von außen sichtbar ist, ob und wann das elektrische Gerät in Betrieb genommen beziehungsweise bedient wird. Fährt nun beispielsweise der Bewohner eines Einfamilienhauses für eine gewisse Zeit in den Urlaub oder ist aus einem anderen Grund für eine längere Zeit abwesend, werden in dieser Zeit beispielsweise die Außenjalousien nicht betätigt, so dass von außen leicht erkennbar ist, dass die betreffende Immobilie leer steht. Das hat ein erhöhtes Risiko von Einbrüchen und Diebstählen zur Folge, da die Diebe von außen erkennen können, dass sie wahrscheinlich ungestört bleiben. Es ist daher bekannt, insbesondere diese elektrischen Geräte so programmierbar auszugestalten, dass sie auch bei Abwesenheit einer die Geräte bedienenden Person automatisch bedient werden. So ist es beispielsweise aus dem Stand der Technik bekannt, elektrische Außenjalousien so zu programmieren, dass sie immer zu einer bestimmten Tageszeit herunter- beziehungsweise heraufgefahren werden.

Dies hat jedoch zum einen den Nachteil, dass derartige Geräte vor der Inbetriebnahme aufwändig programmiert werden müssen. So sind die individuellen Zeiten, zu denen die Geräte ein- bzw. ausgeschaltet werden sollen, in das Gerät beziehungsweise die Bedieneinrichtung des Gerätes einzugeben.

Zudem müssen die programmierten Zeiten, zu denen die elektrischen Geräte bedient werden sollen, individuell auf die Zeit der Abwesenheit angepasst werden. So sind beispielsweise Außenjalousien im Winter üblicherweise über einen deutlich längeren Zeitraum des Tages geschlossen als im Sommer. Dies bedeutet, um nach außen den Effekt der Anwesenheit des Bewohners einer Immobilie zu wahren, muss die Bedieneinrichtung für einen Sommerurlaub anders programmiert werden als für einen Winterurlaub. Auch dies ist kompliziert und nicht sehr komfortabel.

Aus dem Stand der Technik ist es außerdem bekannt, insbesondere Außenjalousien auf die Lichtverhältnisse reagieren zu lassen. Dies ist naturgemäß jedoch nur für die elektrischen Geräte möglich, deren Bedienung mit dem Lichteinfall beziehungsweise der Helligkeit zusammenhängt.

Der Erfindung liegt somit die Aufgabe zugrunde, eine elektrische Bedieneinrichtung zur elektrischen Bedienung wenigstens eines elektrischen Geräts anzugeben, mit dem die Nachteile aus dem Stand der Technik behoben werden können. Ferner soll ein entsprechendes Verfahren sowie ein Computerprogramm angegeben werden.

Die Aufgabe wird gelöst durch eine elektrische Bedieneinrichtung zur elektrischen Bedienung wenigstens eines elektrischen Geräts, aufweisend wenigstens ein manuell zu betätigendes Bedienelement und wenigstens eine programmgesteuerte Steuereinheit, die wenigstens einen Lernmodus und wenigstens einen Automatikmodus aufweist, wobei die Steuereinheit dazu eingerichtet ist, in dem Lernmodus manuelle Betätigungen des Bedienelements durch Benutzer zu erfassen und mit einem ebenfalls erfassten, der jeweiligen manuellen Betätigung zugeordneten Zeitpunkt als Eigenbediendatensatz zu speichern und in dem Automatikmodus automatisch Bediensignale zu erzeugen und an das elektrische Gerät auszugeben, die von der Steuereinheit aufgrund der im Lernmodus gespeicherten Eigenbediendatensätze bestimmt sind, wobei die Bedieneinrichtung ferner wenigstens eine Kommunikationseinheit aufweist, über die die Bedieneinrichtung Daten mit anderen Bedieneinrichtungen austauschen kann, wobei die Steuereinheit dazu eingerichtet ist, Bediendaten anderer Bedieneinrichtungen über die Kommunikationseinheit zu empfangen und zu erfassen und mit einem ebenfalls erfassten, der jeweiligen manuellen Betätigung zugeordneten Zeitpunkt als Fremdbediendatensatz zu speichern, wobei die Steuereinheit ferner dazu eingerichtet ist, Koinzidenzen zwischen den Eigenbediendatensätzen und den Fremdbediendatensätzen zu erkennen und im Automatikmodus die Bediensignale in Abhängigkeit von einer oder mehreren erkannten Koinzidenzen zu erzeugen.

Die Erfindung hat den Vorteil, dass mittels der elektrischen Bedieneinrichtung, wenn diese im Automatikmodus arbeitet, die Simulation der Anwesenheit von Personen, die ansonsten die Bedieneinrichtung betätigen, noch realistischer gestaltet werden kann. Dies erfolgt vollautomatisch mittels des Lernmodus, so dass eine sogar komplexe Bedienvorgänge selbstlernende Bedieneinrichtung, z.B. in Form eines selbstlernenden Schalters, angegeben werden kann. Der Benutzer ist von aufwendigen Einstell- und Programmierarbeiten befreit. Er kann eine erfindungsgemäße elektrische Bedieneinrichtung einfach in einem Geschäft kaufen und wie einen herkömmlichen Lichtschalter einbauen.

Generell ist es möglich, dass die Steuereinrichtung die Bediensignale allein in Abhängigkeit von einer oder mehreren erkannten Koinzidenzen erzeugt, oder zusätzlich in Abhängigkeit von einem oder mehreren weiteren Kriterien, wie z.B. einem zeitlichen Zufallsmuster.

Eine besonders realistische Sequenz von Schaltvorgängen entsteht, wenn die Schaltvorgänge nicht jeden Tag exakt zur gleichen Zeit vorgenommen werden, sondern innerhalb eines vorgegebenen Zeitrahmens variieren. Wenn die Schaltzeiten der einzelnen Bedieneinrichtungen unabhängig voneinander variieren, kann es zu unrealistischen Sequenzen kommen. Wenn z.B. jeden Abend das Licht im Badezimmer eines Hauses ausgeschaltet wird und kurz danach im Schlafzimmer das Licht eingeschaltet wird, kann es bei unabhängiger Variation der Schaltvorgänge in dem Automatikmodus passieren, dass erst das Licht im Schlafzimmer eingeschaltet wird und dann im Badezimmer ausgeschaltet wird, was eher unrealistisch ist. Dieses Problem wird mittels der Erfindung gelöst, indem die Schaltvorgänge unterschiedlicher Bedieneinrichtungen durch deren Kommunikation untereinander zeitlich korreliert werden.

Durch die automatische Erkennung von Koinzidenzen, d.h. zeitlichen Korrelationen, zwischen den eigenen Betätigungen der Bedieneinrichtung und den Betätigungen anderer Bedieneinrichtungen, die in einer Kommunikationsverbindung mit der eigenen Bedieneinrichtung stehen, lassen sich besonders realistische, personenindividuelle Schaltsequenzen zwischen einer Mehrzahl von Bedieneinrichtungen automatisch einlernen und inkonsistente oder unlogische Schaltsequenzen automatisch vermeiden. Dies ist insbesondere vorteilhaft, wenn die Bedieneinrichtung im Automatikmodus die Erzeugung der Bediensignale nicht allein in Abhängigkeit von erkannten Koinzidenzen durchführt, sondern zusätzlich z.B. anhand eines zeitlichen Zufallsmusters. Würde allein das zeitliche Zufallsmuster maßgeblich für die Erzeugung der Bediensignale sein, so könnte dies zu inkonsistenten oder unlogischen Schaltsequenzen führen. Durch zusätzliche Berücksichtigung erkannter Koinzidenzen, z.B. indem diese priorisiert vor der Zeitsteuerung für die Bestimmung des Bediensignals berücksichtigt werden, kann ein sinnvolles, konsistentes Erzeugen von Schaltsequenzen zwischen mehreren Bedieneinrichtungen abgestimmt werden. All dies kann voll automatisch erfolgen.

Die Voraussetzung für eine Realisierung solcher zeitlich korrelierten Schaltvorgänge ist ein vernetztes System aus den verschiedenen Bedieneinrichtungen. Hierfür weist jede Bedieneinrichtung die erwähnte Kommunikationseinheit auf. Zur Vernetzung ist ferner ein Kommunikationsmedium erforderlich. Dies kann Kurzstreckenfunk sein, eine Kommunikation über eine Energieversorgungsleitung, z.B. eine Hochfrequenz-Verbindung über die Kupferadern, eine Vernetzung über ein lokales Netzwerk (Local Area Network - LAN) oder ein Weitbereichs-Netzwerk (Wide Area Network - WAN), z.B. über das Internet. Wird für die Kommunikation eine Energieversorgungsleitung verwendet, z.B. vom Energieversorgungsnetz eines Hauses, ist es vorteilhaft, für die Kommunikation eine Hochfrequenz-Sperre vorzusehen, um sicherzustellen, dass die Kommunikation das jeweilige Gebäude nicht verlässt.

Zur Bildung des vernetzten Systems, d.h. eines solchen Kommunikationsnetzes, ist ebenfalls keine manuelle Konfiguration erforderlich. Das Netzwerk kann sich als Adhoc-Netz bilden. Insbesondere benötigt eine Bedieneinrichtung keine Information darüber, welche anderen Bedieneinrichtungen sich in demselben Raum oder in dem Gebäude befinden. Die erfindungsgemäßen Bedieneinrichtungen können ein vernetztes System aus allen miteinander kompatiblen Bedieneinrichtungen bilden, die in Kommunikationsreichweite liegen. Das Netzwerk kann auch in Form eines vermaschten Netzwerks (meshed network) gebildet werden, wenn z.B. zwei Bedieneinrichtungen aufgrund ihres Abstands voneinander oder aufgrund baulicher Gegebenheiten nicht direkt miteinander kommunizieren können. Dann kann eine Kommunikation über eine dritte Bedieneinrichtung, die als Relais-Kommunikationseinrichtung fungiert, durchgeführt werden. Es ist hierbei vorteilhaft, die Anzahl der auf einem Kommunikationsweg von einer ersten zu einer zweiten Bedieneinrichtung als Relaisstationen zwischengeschalteten Bedieneinrichtungen zahlenmäßig zu begrenzen, z.B. auf ein oder zwei Bedieneinrichtungen, um die Bildung räumlich zu weitreichender Netzwerke, z.B. über mehrere Nachbargebäude, zu vermeiden.

Als Eigenbediendatensatz wird ein Datensatz gespeichert, der zumindest eine Information über die Art der manuellen Betätigung des Bedienelements sowie den Zeitpunkt der manuellen Betätigung aufweist. Als Art der Betätigung des Bedienelements kann z.B. das Einschalten, das Ausschalten oder das Umschalten gespeichert werden, wenn es sich beim Bedienelement um ein Schaltelement handelt, oder die Änderung eines Einstellwerts, wenn es sich beim Bedienelement um ein einstellbares Bedienelement handelt, z.B. bei einem Lichtdimmer. Für die Speicherung des Zeitpunkts liest die Steuereinheit z.B. den aktuellen Wert eines internen Zeitgebers der Steuereinheit aus, der fortlaufend läuft und nicht zwangsläufig auf die korrekte, reale Uhrzeit eingestellt sein muss. Als Zeitpunkt kann aber auch der Wert einer Echtzeituhr oder ein sonstiges Datum mit Bezug zur realen Uhrzeit ausgelesen und gespeichert werden. Das gleiche gilt sinngemäß für den Fremdbediendatensatz, nur dass in der Bedieneinrichtung hierbei die manuelle Betätigung einer anderen Bedieneinrichtung erfasst wird. Der zu speichernde, dieser Betätigung zugeordnete Zeitpunkt kann von einem Zeitgeber der Bedieneinrichtung selbst ausgelesen werden, oder er kann von der anderen Bedieneinrichtung über die Kommunikationseinheit mitübertragen werden.

Für die Erkennung der Koinzidenzen ist es vorteilhaft, wenn die elektrische Bedieneinrichtung für einen bestimmten, nicht zu kurzen Zeitraum im Lernmodus betrieben wird. Da viele als koinzident erkennbare Schaltsequenzen im realen Leben z.B. im Tagesrhythmus auftauchen, ist es vorteilhaft, wenn der Lernmodus zumindest für mehrere Tage aktiv ist, bevor in dem Automatikmodus sinnvoll mit erkannten Koinzidenzen gearbeitet werden kann. Je länger die Lernphase dauert, desto sicherer können Koinzidenzen erkannt werden.

Erkannte Koinzidenzen werden von der elektrischen Bedieneinrichtung ebenfalls gespeichert, z.B. in der Form, dass ein Datensatz gespeichert wird, der Angaben über die andere Bedieneinrichtung, z.B. eine Identifikation wie deren Netzwerkadresse, sowie über die Art des an der eigenen elektrischen Bedieneinrichtung auszulösenden Bediensignals, z.B. Schalter aus oder Schalter an, sowie den Zeitpunkt oder einen bestimmten Zeitrahmen aufweisen kann, für die die erkannte Koinzidenz gültig ist. Wird nun von der elektrischen Bedieneinrichtung über die Kommunikationseinheit ein Signal von einer anderen Bedieneinrichtung empfangen, das inhaltlich zur gespeicherten Koinzidenz passt, z.B. Schalter an im Zeitraum zwischen 18:00 Uhr und 18:30 Uhr, so löst die Steuereinheit der Bedieneinrichtung das hierzu gehörige Bedienereignis aus, d.h. sie erzeugt ein entsprechendes Bediensignal wie etwa Schalter aus.

Grundsätzlich ist es möglich, dass eine Bedieneinrichtung eine Koinzidenz zu einem zeitlich vorausgehenden Ereignis einer anderen Bedieneinrichtung bezüglich des eigenen Ereignisses erkennt, oder bezüglich eines späteren Ereignisses einer anderen Bedieneinrichtung. Sofern alle Bedieneinrichtungen, die miteinander vernetzt sind, zur Koinzidenz-Erkennung eingerichtet sind, ist es vorteilhaft, wenn diese Bedieneinrichtungen einheitlich nur in einer bestimmten zeitlichen Richtung erkennen, d.h. in Richtung frühere Ereignisse oder in Richtung spätere Ereignisse, jeweils bezogen auf eigene Betätigungen. Auf diese Weise wird ein undefiniertes Erzeugen von kettenmäßig verknüpften Koinzidenzen zwischen den miteinander kommunizierenden Bedieneinrichtungen vermieden.

Gemäß einer vorteilhaften Weiterbildung der Erfindung ist die Steuereinheit dazu eingerichtet, Koinzidenzen zwischen den Eigenbediendatensätzen und den Fremdbediendatensätzen zu erkennen, bei denen der Zeitpunkt des Fremdbediendatensatzes vor dem Zeitpunkt des Eigenbediendatensatzes liegt. Auf diese Weise blickt die Bedieneinrichtung hinsichtlich der Erkennung der Koinzidenzen immer in die Vergangenheit. Anders gesagt, eine Bedieneinrichtung synchronisiert sich damit bei einer erkannten Koinzidenz immer auf eine andere Bedieneinrichtung, bei der das Bedienereignis zeitlich vorausgeht.

Gemäß einer vorteilhaften Weiterbildung der Erfindung ist die Steuereinheit dazu eingerichtet, nur Zeitdifferenzen zwischen den Zeitpunkten von auf Vorliegen einer Koinzidenz untersuchten Paaren von Eigenbediendatensätzen und Fremdbediendatensätzen als Indiz für eine Koinzidenz auszuwerten, die kleiner als ein vorgegebener Zeitdifferenzgrenzwert sind. Auf diese Weise kann die automatische Koinzidenz-Erkennung auf lebensnahe, realistische Situationen angepasst werden. So ist z.B. beim Schalten von Lichtschaltern in verschiedenen Räumen eines Gebäudes davon auszugehen, dass, sofern zwischen den Schaltvorgängen tatsächlich eine Koinzidenz vorhanden ist, die koinzidierenden Ereignisse in relativ kurzen Zeiträumen im Bereich von Minuten aufeinander folgen. Gemäß einer vorteilhaften Weiterbildung der Erfindung ist der Zeitgrenzwert daher kleiner als 60 Minuten, insbesondere kleiner als 30 Minuten, insbesondere kleiner als 10 Minuten, insbesondere kleiner als 5 Minuten.

Gemäß einer vorteilhaften Weiterbildung der Erfindung ist die Steuereinheit dazu eingerichtet, Bediendatensätze anderer Bedieneinrichtungen, die älter als der Zeitdifferenzgrenzwert sind, im Speicher zu verwerfen. Das Verwerfen kann z.B. dadurch erfolgen, dass die älteren Fremdbediendatensätze durch neuere Fremdbediendatensätze überschrieben werden oder durch andere Daten überschrieben werden oder aus dem Speicher gelöscht werden. Hierdurch kann der erforderliche Speicherplatzbedarf in vernünftigen Grenzen gehalten werden.

Gemäß einer vorteilhaften Weiterbildung der Erfindung ist die Steuereinheit dazu eingerichtet, die ausgegebenen Bediensignale zusätzlich zeitlich zufallsabhängig oder mit einem vorgegebenen Zeitmuster zu variieren. Hierdurch kann die Realitätsnähe der im Automatikmodus ausgegebenen Bediensignale weiter erhöht werden.

Gemäß einer vorteilhaften Weiterbildung der Erfindung ist die Steuereinheit dazu eingerichtet, selbstständig den Automatikmodus zu aktivieren, wenn für eine vorbestimmte Mindestzeit keine manuelle Betätigung des Bedienelements der Bedieneinrichtung erkannt wurde. Vorteilhaft ist es, die vorbestimmte Mindestzeit im Bereich von einem oder mehreren Tagen festzulegen, weil dann davon auszugehen ist, dass ein Gebäude tatsächlich zumindest vorübergehend unbewohnt ist. Dies hat den Vorteil, dass der Automatikmodus und damit der Effekt zur Einbrecherabschreckung auch dann in Kraft tritt, wenn eine willkürliche Aktivierung des Automatikmodus durch eine Person vergessen wurde.

Gemäß einer vorteilhaften Weiterbildung der Erfindung ist die Steuereinheit dazu eingerichtet, Koinzidenzen mit einem Bezug zu einem Zeitzyklus, insbesondere tagesweise, wochenweise, monatsweise oder jahreszeitweise, zu erkennen und zu gruppieren und im Automatikmodus die angegebenen Bediensignale nur von solchen Koinzidenzen abhängig zu machen, deren Gruppierung dem aktuellen realen Zeitzyklus entspricht. So kann z.B. der Fall vorliegen, dass eine bestimmte Schaltsequenz verschiedener Bedieneinrichtungen, die als Koinzidenz erkannt werden kann, nur an bestimmten Wochentagen auftritt, z.B. immer dienstags. Dementsprechend wird diese Koinzidenz der Gruppe "Dienstag" zugeordnet, und es werden von dieser Koinzidenz abhängige Bediensignale im Automatikmodus dann auch nur dienstags erzeugt. Ein anderes Beispiel ist z.B. die unterschiedliche Betätigung von Lichtschaltern je nach Jahreszeit, d.h. in Folge der unterschiedlichen Sonnenaufgangs- und Sonnenuntergangszeiten. Dies kann z.B. durch eine monatsweise oder jahreszeitweise Gruppierung von Koinzidenzen realitätsnah im Automatikmodus nachgebildet werden.

Der Zeitzyklus kann von der Bedieneinrichtung durch ihren internen Zeitgeber festgelegt werden. Ist dieser Zeitgeber nicht auf die reale Uhrzeit (Echtzeit) eingestellt oder damit synchronisiert, so reicht auch eine interne Zeitgröße hierfür aus. Es kann aber je nach Ausgestaltung des Zeitgebers auch ein Zeitzyklus der Echtzeit für die Gruppierung herangezogen werden.

Gemäß einer vorteilhaften Weiterbildung der Erfindung weist die Bedieneinrichtung als Zeitgeber eine Echtzeituhr und/oder einen Empfänger zum Empfang eines Echtzeit-Uhrzeitsignals auf, jeweils gekoppelt mit der Steuereinheit. Dies kann z.B. ein DCF-77-Empfänger sein. Auf diese Weise kann die Steuereinheit die reale Uhrzeit abfragen.

Die Bedieneinrichtung kann eine integrierte elektrische Energieversorgungseinrichtung aufweisen, über die eines, mehrere oder alle Funktionselemente der Bedieneinrichtung im Falle eines Stromausfalls weiterbetrieben werden können. Die elektrische Energieversorgungseinrichtung kann zum Beispiel als Pufferakku, Pufferbatterie oder Pufferkondensator ausgebildet sein. So kann zum Beispiel der Zeitgeber der elektrischen Bedieneinrichtung über die integrierte Energieversorgungseinrichtung bei Stromausfall weiterbetrieben werden, damit die damit gemessene relative Uhrzeit nicht verloren geht.

Gemäß einer vorteilhaften Weiterbildung der Erfindung ist die Bedieneinrichtung als dezentrale Bedieneinrichtung zur Bildung eines dezentralen Systems von Bedieneinrichtungen ausgebildet, das ohne zentrale Steuereinheit funktionsfähig ist. Dies hat den Vorteil, dass keine zentrale Steuereinheit beschafft und installiert werden muss. Vielmehr können die dezentralen Bedieneinrichtungen nach Bedarf beschafft und installiert werden, z.B. durch Austausch vorhandener Lichtschalter. Das dezentrale System kann bei Bedarf nach und nach mit weiteren Bedieneinrichtungen ergänzt werden, ohne dass es besonderer Umstellungsmaßnahmen bedarf.

Das System kann außer den beschriebenen Bedieneinrichtungen (z.B. in Form von Schaltern) auch Pseudoschalter aufweisen, die mit den beschriebenen Bedieneinrichtungen kommunizieren. Solche Pseudoschalter können einen oder mehrere Sensoren aufweisen und aufgrund von damit sensorisch erkannten Ereignissen Pseudo-Schaltvorgänge an die anderen Bedieneinrichtungen melden, ohne selbst tatsächlich etwas zu schalten. Zum Beispiel kann für die Überwachung von Sonnenaufgangszeiten und Sonnenuntergangszeiten ein Pseudoschalter mit einem lichtempfindlichen Sensor, zum Beispiel einer Fotozelle, ausgebildet sein und abhängig von den erkannten Sonnenaufgangszeiten und/oder Sonnenuntergangszeiten Schaltvorgänge an die anderen Bedieneinrichtungen melden.

Die eingangs genannte Aufgabe wird außerdem gelöst durch ein dezentrales System mit mehreren Bedieneinrichtungen der zuvor erläuterten Art, die an ein Kommunikationsmedium gekoppelt sind, über das die Bedieneinrichtungen mittels ihrer Kommunikationseinheiten Daten miteinander austauschen können. Auch hierdurch werden die eingangs genannten Vorteile erreicht. Das Kommunikationsmedium kann z.B. eine Funkstrecke oder eine drahtgebundene Verbindung sein.

Die eingangs genannte Aufgabe wird außerdem gelöst durch ein Verfahren zur elektrischen Bedienung wenigstens eines elektrischen Geräts mittels einer elektrischen Bedieneinrichtung, aufweisend wenigstens ein manuell zu betätigendes Bedienelement und wenigstens eine programmgesteuerte Steuereinheit, die wenigstens einen Lernmodus und wenigstens einen Automatikmodus aufweist, wobei die Steuereinheit in dem Lernmodus manuelle Betätigungen des Bedienelements durch Benutzer erfasst und mit einem ebenfalls erfassten, der jeweiligen manuellen Betätigung zugeordneten Zeitpunkt als Eigenbediendatensatz speichert und in dem Automatikmodus automatisch Bediensignale erzeugt und an das elektrische Gerät ausgibt, die von der Steuereinheit aufgrund der im Lernmodus gespeicherten Eigenbediendatensätze bestimmt werden, wobei die Bedieneinrichtung ferner wenigstens eine Kommunikationseinheit aufweist, über die die Bedieneinrichtung Daten mit anderen Bedieneinrichtungen austauscht, wobei die Steuereinheit Bediendaten anderer Bedieneinrichtungen über die Kommunikationseinheit empfängt und erfasst und mit einem ebenfalls erfassten, der jeweiligen manuellen Betätigung zugeordneten Zeitpunkt als Fremdbediendatensatz speichert, wobei die Steuereinheit ferner Koinzidenzen zwischen den Eigenbediendatensätzen und den Fremdbediendatensätzen erkennt und im Automatikmodus die Bediensignale in Abhängigkeit von einer oder mehreren erkannten Koinzidenzen zu erzeugt. Auch hierdurch werden die eingangs genannten Vorteile erreicht.

Das Verfahren kann jeweils vorteilhaft weitergebildet werden durch die in den Unteransprüchen genannten, zusätzlichen Funktionen der Bedieneinrichtung bzw. deren Steuereinheit.

Die eingangs genannte Aufgabe wird außerdem gelöst durch ein Computerprogramm mit Programmcodemitteln eingerichtet zur Durchführung des zuvor genannten Verfahrens, wenn das Computerprogramm auf einem Rechner, einer Steuereinheit, einer Bedieneinrichtung ausgeführt wird. Auch hierdurch lassen sich die eingangs genannten Vorteile erreichen.

Der Lernmodus kann auch als Aufzeichnungsmodus bezeichnet werden, weil in diesem Modus eine Aufzeichnung der manuellen Betätigungen des Bedienelements durch Benutzer erfasst und damit aufgezeichnet wird. Entsprechend kann der Automatikmodus auch als Bedienmodus bezeichnet werden, weil in diesem Modus automatisch Bediensignale erzeugt und an das elektrische Gerät ausgegeben werden.

Eine vorteilhafte Weiterbildung der Erfindung betrifft ein Verfahren zum Betreiben einer Bedieneinrichtung für wenigstens ein elektrisches Gerät, die in einem Aufzeichnungsmodus und einem Bedienmodus betreibbar ist, bei dem in dem Aufzeichnungsmodus erfasst wird, zu welchem Zeitpunkt das wenigstens eine elektrische Gerät bedient wird und entsprechende Bediendaten mit dem Zeitpunkt entsprechenden Zeitdaten versehen und gespeichert werden, wobei die Zeitdaten innerhalb eines Speicher-Zeitintervalls liegen. Zudem wird ein Umschaltzeitpunkt erfasst, zu dem die Bedieneinrichtung von dem Aufzeichnungsmodus in den Bedienmodus umgeschaltet wird. Diesem Umschaltzeitpunkt werden ebenfalls entsprechende Zeitdaten, die im folgenden Wechselzeitpunkt genannt werden, zugeordnet. Auch der Wechselzeitpunkt liegt dabei innerhalb des Speicher-Zeitintervalls. In dem Bedienmodus werden die gespeicherten Bediendaten und Zeitdaten ausgelesen und das wenigstens eine elektrische Gerät in Abhängigkeit von den gespeicherten Bediendaten und Zeitdaten beginnend mit dem Wechselzeitpunkt bedient.

Zunächst wird die Bedieneinrichtung zumeist in dem Aufzeichnungsmodus betrieben. In diesem Modus werden Bediendaten mit zugehörigen Zeitdaten gespeichert, so dass im Nachhinein nachvollziehbar ist, wann das elektrische Gerät wie bedient wurde. Es wird also erfasst, zu welchem Zeitpunkt das Gerät bedient wird und dieser Zeitpunkt wird in Form von entsprechenden Zeitdaten mit den der Art der Bedienung entsprechenden Bediendaten abgespeichert.

Dabei können Bediendaten ein Ein- und Ausschalten beinhalten oder eine auf andere Weise durchgeführte Bedienung des wenigstens einen elektrischen Gerätes. So ist es beispielsweise bei Außenjalousien denkbar, dass diese nicht vollständig heruntergefahren werden, sondern beispielsweise nur teilweise ein Fenster verdecken, um einfallende Sonnenstrahlen abzufangen, eine Grundhelligkeit jedoch im Innern des Raumes aufrechtzuerhalten. Diese Aufzeichnung der Bediendaten mit den zugehörigen Zeitdaten, aus denen sich rekonstruieren lässt, wann die jeweilige Bedienung stattgefunden hat, wird z.B. über ein Speicher-Zeitintervall aufrechterhalten. Dieses kann beispielsweise eine Woche, einen Tag, einen Monat oder eine andere geeignete Zeitspanne umfassen. Innerhalb des Speicher-Zeitintervalls wird nun folglich jede Bedienung des wenigstens einen elektrischen Gerätes mit zugehörigen Zeitdaten versehen und abgespeichert.

Wird nun die Bedieneinrichtung von dem Aufzeichnungsmodus in den Bedienmodus umgeschaltet, wird dem Umschaltzeitpunkt, zu dem dieses Umschalten geschieht, ein Wechselzeitpunkt innerhalb des Speicher-Zeitintervalls zugeordnet. Von diesem Moment an wird die Bedieneinrichtung im Bedienmodus betrieben, so dass die gespeicherten Bediendaten und Zeitdaten aus dem Speicherelement ausgelesen werden. Diesen gespeicherten Bedien- und Zeitdaten entsprechend wird das elektrische Gerät bedient, wobei die Bedienung mit den Bediendaten beginnt, die die auf den Wechselzeitpunkt folgenden Zeitdaten aufweisen. Das elektrische Gerät wird folglich in der Regel nicht zuerst in Abhängigkeit der Bediendaten bedient, die am zeitlichen Anfang des Speicher-Zeitintervalls liegen.

Im Inneren der Bedieneinrichtung befindet sich z.B. eine interne Uhr, die beispielsweise als Taktzähler ausgebildet sein kann. Alternativ dazu ist es auch möglich, dass eine elektrische Steuereinheit vorgesehen ist, die zu jedem Zeitpunkt mit einer externen Uhr, beispielsweise über ein Satellitensystem wie GPS, in Verbindung steht, um sich so die aktuelle Uhrzeit zu beschaffen. Sobald die Bedieneinrichtung zum ersten Mal im Aufzeichnungsmodus in Betrieb genommen wird, beginnt das Speicher-Zeitintervall zu laufen. Dabei ist es für die Funktionsweise des erfindungsgemäßen Verfahrens unerheblich, zu welcher tatsächlichen Uhrzeit oder an welchem Daten oder Wochentag dies geschieht. Ist in der Bedieneinrichtung eine interne Uhr vorgesehen, durchläuft diese zunächst das Speicher-Zeitintervall. Gelangt die Uhr zum dem Ende dieses Intervalls, beginnt sie erneut von vorne, so dass jedem Zeitpunkt, der beispielsweise aus Datum und Uhrzeit besteht, ein Zeitpunkt innerhalb des Speicher-Zeitintervalls zugeordnet werden kann.

Sobald die Bedieneinrichtung vom Aufzeichnungsmodus in den Bedienmodus umgeschaltet wird, wird diesem Umschaltzeitpunkt ein Wechselzeitpunkt im Speicher-Zeitintervall zugeordnet. Von diesem Moment an werden die folgenden Bediendaten und Zeitdaten ausgelesen und das wenigstens eine elektrische Gerät diesen Daten entsprechend bedient.

Durch die Erfindung wird das wenigstens eine elektrische Gerät im Bedienmodus der Bedieneinrichtung folglich vollautomatisch bedient. Insbesondere bei Verwendung für Außenjalousien oder Beleuchtungseinrichtungen kann so der Eindruck eines anwesenden Bewohners des jeweiligen Gebäudes oder der Wohnung aufrechterhalten werden. Eine aufwändige Programmierung ist jedoch nicht nötig, da dies durch das tagtägliche Bedienen der jeweiligen elektrischen Geräte im Aufzeichnungsmodus stattfindet.

Gemäß einer vorteilhaften Weiterbildung der Erfindung wird in dem Bedienmodus das Speicher-Zeitintervall wiederholt durchlaufen und das wenigstens eine elektrische Gerät wiederholt in Abhängigkeit von den gespeicherten Bediendaten und Zeitdaten bedient. Beträgt beispielsweise die Länge des Speicher-Zeitintervalls eine Woche, ist der Besitzer einer Wohnung jedoch drei Wochen im Urlaub, wird das Speicher-Zeitintervall dreimal durchlaufen und das jeweilige elektrische Gerät, beispielsweise die Außenjalousie, entsprechend bedient. Dabei beginnt die Bedieneinrichtung zu dem Umschaltzeitpunkt mit der Bedienung der wenigstens einen Gerätes. Sie beginnt nicht mit der Bedienung den Daten entsprechend, die am Anfang des Speicher-Zeitintervalls gespeichert wurden, es sei denn, die Umschaltung findet zufällig zu diesem Zeitpunkt statt.

Als vorteilhaft hat sich zudem herausgestellt, dass in dem Aufzeichnungsmodus gespeicherte Bediendaten und Zeitdaten mit weiteren Bediendaten und zugeordneten Zeitdaten überschrieben werden, wenn eine Dauer, in der die Bedieneinrichtung in dem Aufzeichnungsmodus betrieben wird, länger als die Länge des Speicher-Zeitintervalls ist. Beträgt die Länge des Speicher-Zeitintervalls beispielsweise eine Woche, werden in der ersten Woche, in der die Bedieneinrichtung im Aufzeichnungsmodus betrieben wird, die Bediendaten mit zugehörigen Zeitdaten gespeichert. In der zweiten Woche werden diese in der ersten Woche aufgezeichneten Bediendaten durch Bediendaten der zweiten Woche überschrieben. Damit ist sichergestellt, dass wann immer die Bedieneinrichtung aus dem Aufzeichnungsmodus in den Bedienmodus umgeschaltet wird, immer möglichst aktuelle Bediendaten mit zugehörigen Zeitdaten in der Speichereinrichtung gespeichert sind. Insbesondere, wenn die Bedienung des wenigstens einen elektrischen Gerätes von der verfügbaren Tageslichtmenge abhängt, wie es beispielsweise bei Außenjalousien der Fall ist, wird auf diese Weise gewährleistet, dass nicht für Sommer- und Winterurlaube unterschiedlich programmierte Bedieneinrichtungen vorgesehen sein müssen. Es werden immer die aktuellsten Bediendaten mit den jeweiligen Zeitdaten verwendet. Alternativ dazu ist es natürlich auch möglich, nur einmal über die Länge eines Speicher-Zeitintervalls die jeweiligen Bediendaten mit zugehörigen Zeitdaten zu speichern und, nachdem die Bedieneinrichtung für die Länge eines Speicher-Zeitintervalls im Aufzeichnungsmodus betrieben wurde, keine weiteren Bediendaten abzuspeichern.

Als vorteilhaft hat sich zudem herausgestellt, wenn die Länge des Speicher-Zeitintervalls einstellbar ist, um unterschiedlichen Bedürfnissen gerecht zu werden.

Insbesondere dann, wenn die Dauer (Aufzeichnungslänge), in der die Bedieneinrichtung in dem Aufzeichnungsmodus betrieben wird, länger ist als die Länge (Aufzeichnungszykluszeit) des Speicher-Zeitintervalls, kann vorgesehen sein, dass die letzten Werte des Speicher-Zeitintervalls nicht überschrieben werden, sondern in einen History-Speicher übertragen werden, der zum Beispiel zur Trenderkennung genutzt werden kann, und/oder um mittels statistischer Rechenmethoden zusammen mit dem aktuellen Schaltwert einen neuen Aufzeichnungswert zu bilden, der gespeichert wird.

Bei manchen elektrischen Geräten, die durch eine Bedieneinrichtung bedient werden, die mit einem hier beschriebenen Verfahren betrieben werden kann, ist es nötig, dass die Bedienung immer zur exakt selben Zeit erfolgt. Bei anderen elektrischen Geräten, wie beispielsweise Außenjalousien, kann durch eine zu exakte Reproduktion der erwünschte Eindruck eines anwesenden Bewohners wieder zunichte gemacht werden. So ist es beispielsweise unwahrscheinlich, dass Außenjalousien jeden Tag um exakt die gleiche Zeit betätigt werden. Beträgt die Länge des Speicher-Zeitintervalls jedoch beispielsweise einen Tag wäre genau dies der Fall. Daher kann es vorteilhaft sein, wenn bei der Bedienung des elektrischen Gerätes den Bedien- und Zeitdaten entsprechend nicht eine Bedienung zu den exakten gespeicherten Zeitdaten vorgenommen wird, sondern eine Bedienung zu leicht verschobenen und veränderten Zeitdaten erfolgt. Ist beispielsweise ein Herablassen der Außenjalousie bei einer gewissen Uhrzeit gespeichert worden, kann bei dieser Ausgestaltung des Verfahrens im Bedienmodus ein Herablassen der Außenjalousien um beispielsweise fünf bis zehn Minuten versetzt vorgenommen werden. Die Länge des Zeitintervalls, um die die Bedienung jeweils verschoben wird, kann voreingestellt, computergeneriert oder zufallsgesteuert sein.

Zudem ist es möglich, die tatsächliche Bedienung des wenigstens einen elektrischen Gerätes im Bedienmodus der Bedieneinrichtung an äußere Einflüsse zu koppeln. Dies ist insbesondere für das Bedienen beispielsweise von elektrischen Rollläden oder Beleuchtungen denkbar, die beispielsweise in Abhängigkeit des jeweiligen Sonnenauf- und/oder Sonnenuntergangs gesteuert werden können. Dabei ist es beispielsweise denkbar, dass eine elektrische Steuereinheit eine Korrelation zwischen dem im Aufzeichnungsmodus der Bedieneinrichtung aufgezeichneten Bediendaten und Zeitdaten und dem jeweiligen Sonnenauf- bzw. Sonnenuntergang erkennt und anhand dieser erkannten Korrelation die Bedienung des wenigstens einen elektrischen Geräts im Bedienmodus der Bedieneinrichtung errechnet. Wird die Bedieneinrichtung beispielsweise über lange Zeit im Bedienmodus betrieben, beispielsweise weil der Besitzer einer Immobilien für mehrere Monate abwesend ist, ist es möglich, das zwischen dem letzten Aufzeichnen von Bedien- und Zeitdaten im Aufzeichnungsmodus und der aktuellen Wiedergabe mehrere Monate liegen. Wird beispielsweise eine Lichtquelle immer kurz nach Sonnenuntergang eingeschaltet, ist dies beispielsweise im Februar deutlich eher an einem Tag als im Juni oder Juli. Wird durch eine hier beschriebene Bedieneinrichtung die Anwesenheit des Besitzers der Immobilien simuliert, würde die Verschiebung des Sonnenauf- bzw. Sonnenuntergangs die Qualität dieser Simulation deutlich beeinträchtigen, weil die Bedieneinrichtung im Bedienmodus beispielsweise die elektrische Beleuchtung in einem Haus auch im Juni oder Juli beispielsweise um 17 Uhr betätigt, weil die Bedieneinrichtung zum letzten Mal im Februar im Aufzeichnungsmodus betrieben wurde. Eine Anpassung an die Sonnenauf- und Sonnenuntergangszeiten kann dies wirksam verhindern.

Wird die Bedieneinrichtung zudem mit Daten über kalendarische Besonderheiten, beispielsweise Feiertage, ausgerüstet, können auch diese in Betracht gezogen werden. So könnte eine derartige Bedieneinrichtung im Bedienmodus beispielsweise dafür sorgen, dass für den Fall, dass ein Feiertag erkannt wird, elektrische Jalousien am Morgen des jeweiligen Tages später geöffnet werden als an herkömmlichen Werktagen. Auch dadurch wird die Simulation der Anwesenheit des Besitzers einer Immobilie deutlich verbessert. Gleiches gilt beispielsweise für die Verwendung von Feriendaten oder sonstigen Besonderheiten.

Auch in anderen Fällen können Korrelationen zwischen verschiedenen Bedienvorgängen, die im Aufzeichnungsmodus der Bedieneinrichtung aufgezeichnet wurden, für die Bedienung des wenigstens einen elektrischen Gerätes im Bedienmodus der Bedieneinrichtung verwendet werden. Erkennt die elektrische Steuereinheit beispielsweise, dass ein elektrisches Gerät, beispielsweise eine Beleuchtung immer zwischen 18 Uhr und 18.30 Uhr eingeschaltet wird, kann sie anstelle der exakten Wiedergabe dieser Bediendaten für die Bedienung des Geräts im Bedienmodus Zeitdaten vorsehen, die beispielsweise zufällig in einem entsprechenden Zeitintervall gewählt werden. Für die Auswahl entsprechender Zeitdaten können unterschiedlichste Algorithmen verwendet werden.

Gemäß einer vorteilhaften Weiterbildung der Erfindung verfügt die Bedieneinrichtung über mehrere Bedienelemente, mit denen vorteilhafterweise mehrere elektrische Geräte bedient werden können. In diesem Fall ist es beispielsweise vorteilhaft, im Aufzeichnungsmodus Bediendaten der Bedienelemente in separaten Speichereinheiten zu speichern. Dies macht eine Nachrüstung bestehender Bedieneinrichtungen besonders einfach möglich.

Gemäß einer vorteilhaften Weiterbildung der Erfindung ist die Bedieneinrichtung derart ausgestaltet, dass sie für jedes zu bedienende elektrische Gerät separat in den Aufzeichnungsmodus und/oder den Bedienmodus schaltbar ist. Auf diese Weise können elektrische Geräte, die beispielsweise während urlaubsbedingter Abwesenheit nicht verwendet werden, mit Geräten, die bei urlaubsbedingter Abwesenheit automatisch bedient werden sollen, mit der gleichen Bedieneinrichtung betrieben werden. Die nicht zu verwendeten Geräte werden dann nicht in den Bedienmodus geschaltet.

Eine erfindungsgemäße Bedieneinrichtung für wenigstens ein elektrisches Gerät verfügt über wenigstens ein Bedienelement zum Bedienen des wenigstens einen elektrischen Gerätes und eine elektrische Steuereinheit, die eingerichtet ist zum Durchführen eines der oben beschriebenen Verfahren. Dabei kann ein Bedienelement beispielsweise ein Schalter, beispielsweise ein Kipp- oder Druckschalter, ein Hebel oder ein Drehschalter oder eine sonstige Art eines Bedienelementes sein. Zu der elektrischen Steuereinheit gehört vorteilhafterweise wenigstens ein Speicherelement, in dem die zu speichernden Bediendaten und Zeitdaten abgelegt werden können. Für den Fall, dass die Bedieneinrichtung zu Beginn nur für eine Zeitdauer im Aufzeichnungsmodus betrieben wird, die kürzer ist als die Länge des Speicher-Zeitintervalls, sind vorteilhafterweise in dem Speicherelement bereits fiktive Bediendaten mit Zeitdaten hinterlegt. Ansonsten hätte die Bedieneinrichtung keine Möglichkeit, über die gesamte Dauer des Speicher-Zeitintervalls Bediendaten mit Zeitdaten zu speichern. Zudem ist vorteilhafterweise die Zuordnung zwischen aktuellem Zeitpunkt und Zeitpunkt innerhalb des Speicher-Zeitintervalls einstellbar. Damit kann beispielsweise nach einem Stromausfall, der die Bedieneinrichtung für eine gewisse Zeit außer Betrieb gesetzt hat, die Bedieneinrichtung weiter betrieben werden, ohne dass erneut die gesamte Dauer des Speicher-Zeitintervalls abgewartet werden muss, um über diese gesamte Dauer Bediendaten mit zugehörigen Zeitdaten zu sammeln.

Für eine erfindungsgemäße Vorrichtung ist es unerheblich, zu welchem tatsächlichen Zeitpunkt, also beispielsweise zu welcher Uhrzeit, das Speicher-Zeitintervall beginnt und zu welchem Zeitpunkt die Vorrichtung zum ersten Mal in dem Aufzeichnungsmodus betrieben wird. Beträgt die Länge des Speicher-Zeitintervalls beispielsweise eine Woche, ist es für die Vorrichtung unerheblich, auf welchen Wochentag der Beginn dieses Speicher-Zeitintervalls fällt. Sofern die Vorrichtung im Aufzeichnungsmodus betrieben wird, zeichnet sie für die Dauer des Speicher-Intervalls, vorliegend also für eine Woche, auf, wann das elektrische Gerät wie bedient wird. Sofern die Vorrichtung mindestens für die Dauer eines Speicher-Zeitintervalls im Aufzeichnungsmodus betrieben wird, hat sie folglich über die gesamte Dauer dieses Zeitintervalls Bediendaten mit entsprechenden Zeitdaten aufgezeichnet. Wird die Vorrichtung aus dem Aufzeichnungsmodus in den Bedienmodus umgeschaltet, wird diesem Umschaltzeitpunkt ein Wechselzeitpunkt innerhalb des Speicher-Zeitintervalls zugeordnet. Dieser kann beispielsweise am dritten Tag eines eine Woche dauernden Aufzeichnungs-Zeitintervalls liegen. Die Vorrichtung wird von diesem Moment an folglich im Bedienmodus betrieben. Dabei werden für die Bedienung des wenigstens einen elektrischen Gerätes die Bedien- und Zeitdaten verwendet, die während des Betriebs der Vorrichtung im Aufzeichnungsmodus aufgezeichnet wurden. Dabei beginnt die Vorrichtung jedoch nicht am Beginn des Speicher-Zeitintervalls sondern am Wechselzeitpunkt.

Kommt es nun beispielsweise in der Stromversorgung der Bedieneinrichtung zu einem Fehler, beispielsweise durch einen Stromausfall, geht die feste Zuordnung zwischen einem Zeitpunkt innerhalb des Speicher-Zeitintervalls und der tatsächlichen Uhrzeit verloren. Diese kann über die vorteilhafterweise einstellbare Zuordnung zwischen dem aktuellen Zeitpunkt, also der tatsächlichen Uhrzeit, und dem Zeitpunkt innerhalb des Speicher-Zeitintervalls wieder hergestellt werden. Ansonsten könnte es passieren, dass das wenigstens eine elektrische Gerät an einem Vormittag in Abhängigkeit von Bediendaten und Zeitdaten bedient werden, die an einem Abend aufgezeichnet würden. Handelt es sich bei dem wenigstens einen elektrischen Gerät beispielsweise um eine Lichtquelle, wäre damit die gewollte Funktion der Vorrichtung nicht mehr zu erreichen. Um dies zu verhindern, müssten sämtliche im Speicher-Zeitintervall gespeicherten Daten ignoriert und durch eine neue Aufzeichnung, für die die Vorrichtung im Aufzeichnungsmodus betrieben werden müsste, ersetzt werden.

Vorteilhafterweise verfügt die Bedieneinrichtung über mehrere Bedienelemente, deren Bediendaten gespeichert werden, wenn die Bedieneinrichtung in dem Aufzeichnungsmodus betrieben wird. Diese mehreren Bedienelemente sind vorteilhafterweise ausgebildet, um mehrere elektrische Geräte zu bedienen. Dabei ist es vorteilhaft, wenn jedem Bedienelement eine Speichereinrichtung zum Speichern der Bediendaten des jeweiligen Bedienelementes und der zugehörigen Zeitdaten zugeordnet ist.

Eine derartige Bedieneinrichtung kann beispielsweise Lichtschalter für Lampen in unterschiedlichen Räumen eines Hauses umfassen. In diesem Fall ist es von Vorteil, wenn jedem Bedienelement, also jedem Lichtschalter, eine separate Speichereinrichtung zugeordnet ist, die in besonders vorteilhafter Weise in räumlicher Nähe zu dem Lichtschalter angeordnet ist. Auf diese Weise lassen sich auch bestehende Häuser leicht mit einer entsprechenden Bedieneinrichtung nachrüsten. Zudem ist es vorteilhaft, wenn an jedem Bedienelement ein Umschaltelement angeordnet ist, durch das die Bedieneinrichtung von dem Aufzeichnungsmodus in den Bedienmodus und umgekehrt umschaltbar ist. Damit kann beispielsweise bei der Verwendung von mehreren Lichtschaltern für unterschiedliche Lichtquellen in einem Haus an jedem Lichtschalter die Bedieneinrichtung vom Aufzeichnungsmodus in den Bedienmodus und umgekehrt umgeschaltet werden. Dies kann beispielsweise ein Druckschalter sein, der beispielsweise neben dem Lichtschalter angeordnet oder in den eigentlichen Lichtschalter integriert ist.

Gemäß einer vorteilhaften Weiterbildung der Erfindung ist dabei jeder Bedieneinrichtung eine Sendeeinrichtung und eine Empfangseinrichtung zugeordnet zum Senden und Empfangen von Signalen über die Umschaltung von dem Aufzeichnungsmodus in den Bedienmodus und umgekehrt von einer Bedieneinrichtung an alle anderen Bedieneinrichtungen. Damit ist es beispielsweise über Funk möglich, Signale von einem Bedienelement, also beispielsweise von einem Lichtschalter, zu den anderen im Haus verwendeten Lichtschaltern zu senden. Damit ist keine zentrale Einheit mehr nötig, in der beispielsweise alle Bediendaten gespeichert werden oder die zentral die Umschaltung der Bedieneinrichtung überwacht.

Eine Bedieneinrichtung verfügt zudem vorteilhafterweise über eine Signaleinrichtung, durch die angezeigt werden kann, ob sich die Bedieneinrichtung im Aufzeichnungsmodus oder im Bedienmodus befindet. Dies kann beispielsweise eine LED oder eine sonstige Sendeeinrichtung zum Aussenden von optischen Signalen sein, die beispielsweise in oder bei einem Bedienelement angeordnet ist. So ist es beispielsweise denkbar, in einem Lichtschalter, der Teil der Bedieneinrichtung ist, einen Druckschalter vorzusehen, der eingerichtet ist, beispielsweise zu leuchten, wenn sich die Bedieneinrichtung im Bedienmodus befindet.

Die Erfindung wird nachfolgend anhand von Ausführungsbeispielen unter Verwendung von Zeichnungen näher erläutert.

Es zeigen:
- Figur 1: - ein Blockschaltbild einer Bedieneinrichtung gemäß einem
- Figur 2: ersten Ausführungsbeispiel der vorliegenden Erfindung, - ein Bedienelement einer Bedieneinrichtung im Bedienmodus,
- Figur 3: - ein Bedienelement einer Bedieneinrichtung im Aufzeichnungsmodus,
- Figur 4: - ein weiteres Bedienelement für eine Bedieneinrichtung gemäß einem Ausführungsbeispiel der vorliegenden Erfindung,
- Figur 5: - ein Bedienelement in einer schematischen 3D- und einer Schnittdarstellung,
- Figur 6: - ein mit einer Bedieneinrichtung gemäß einem Ausführungsbeispiel der vorliegenden Erfindung ausgerüstetes Haus,
- Figur 7: - die schematische Schnittdarstellung eines mit einer Bedieneinrichtung gemäß einem weiteren Ausführungsbeispiel der vorliegenden Erfindung ausgerüsteten Hauses,
- Figur 8: - eine erste Schaltsequenz und
- Figur 9: - eine zweite Schaltsequenz.

In den Figuren werden gleiche Bezugszeichen für einander entsprechende Elemente verwendet.

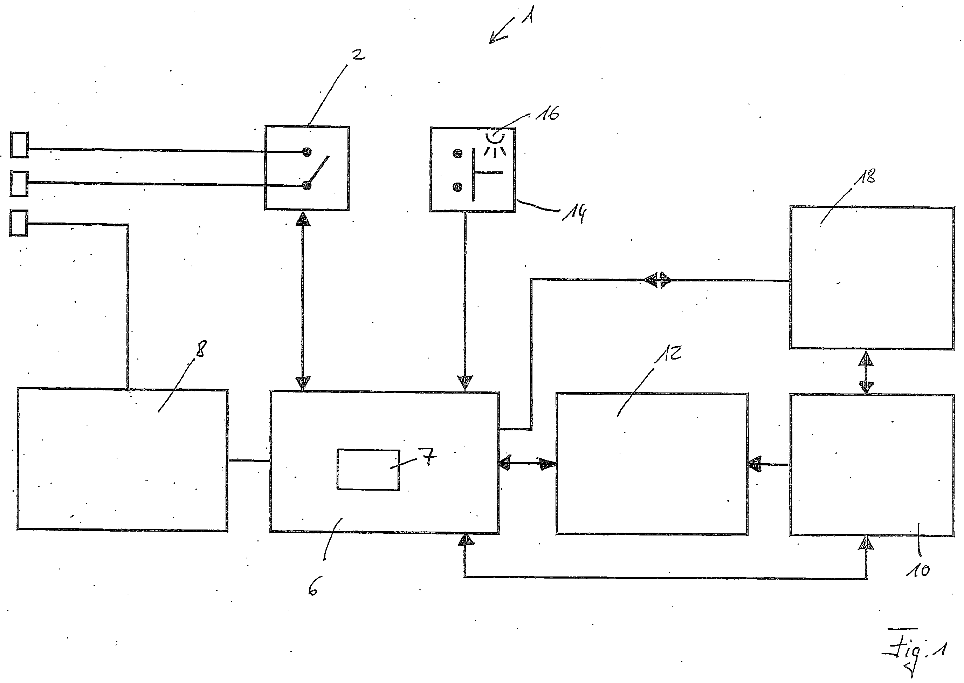

Figur 1 zeigt ein Blockschaltbild einer Bedieneinrichtung 1 gemäß einem Ausführungsbeispiel der vorliegenden Erfindung. Sie umfasst ein Bedienelement 2, das in Figur 1 durch einen Lichtschalter realisiert ist. Durch diesen ist ein elektrisches Gerät 4, das in Figur 1 nicht dargestellt ist, bedienbar.

Sofern sich die Bedieneinrichtung 1 im Aufzeichnungsmodus befindet, werden Bediendaten vom Bedienelement 2 an eine programmgesteuerte Steuereinheit 6 der Bedieneinrichtung 1 übermittelt. Diese verfügt über einen Rechner 7, z.B. einen Mikroprozessor, und eine Stromversorgung 8. Der Rechner 7 führt ein Computerprogramm aus, das z.B. in einer Speichereinrichtung 12 gespeichert sein kann. Im in Figur 1 gezeigten Ausführungsbeispiel verfügt die Bedieneinrichtung 1 über einen Zeitgeber in Form einer internen Uhr 10, die von der Steuereinheit 6 abgefragt werden kann, so dass den Bediendaten, die vom Bedienelement 2 an die Steuereinheit 6 übermittelt werden, entsprechende Zeitdaten zugeordnet werden können. Die Bediendaten mit den zugehörigen Zeitdaten werden in der Speichereinrichtung 12 gespeichert.

Die Bedieneinrichtung 1 verfügt über ein Umschaltelement 14, durch das die Bedieneinrichtung 1 vom Aufzeichnungsmodus in den Bedienmodus und umgekehrt umgeschaltet werden kann. In dem Umschaltelement 14 befindet sich eine Leuchtdiode 16, durch die angezeigt werden kann, in welchem Modus die Bedieneinrichtung 1 gerade betrieben wird.

Wird die Bedieneinrichtung 1 im Aufzeichnungsmodus betrieben, kann beispielsweise die Leuchtdiode 16 im nicht leuchtenden Zustand sein. Hat die Uhr 10 das Speicherzeitintervall durchlaufen, beginnt sie erneut am Beginn des Speicher-Zeitintervalls. Neue Bediendaten, die durch die Bedienung des Bedienelementes 2 an die elektrische Steuereinheit 6 gesendet werden, werden in der Speichereinrichtung 12 gespeichert und bereits vorhandene Daten überschrieben.

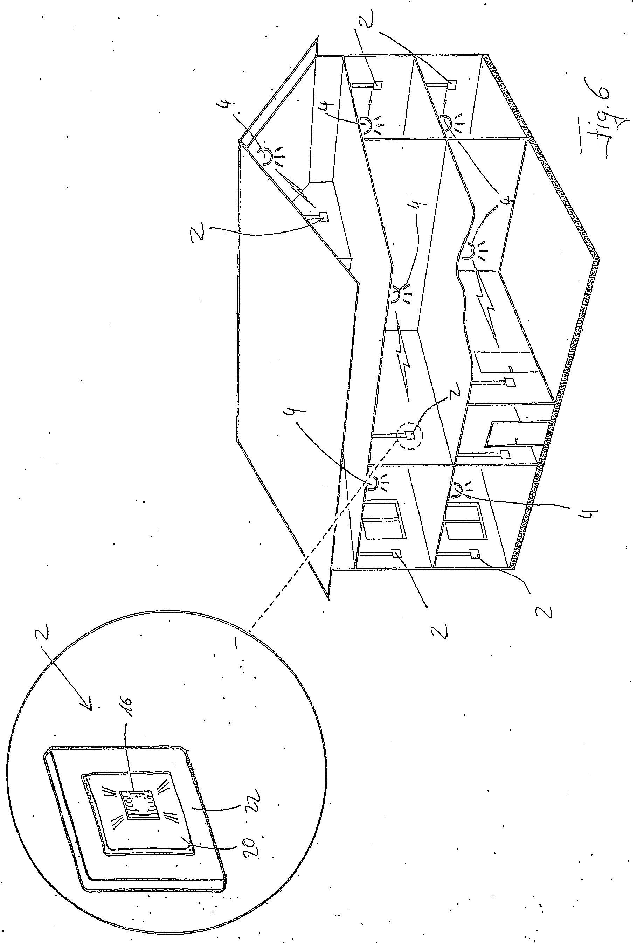

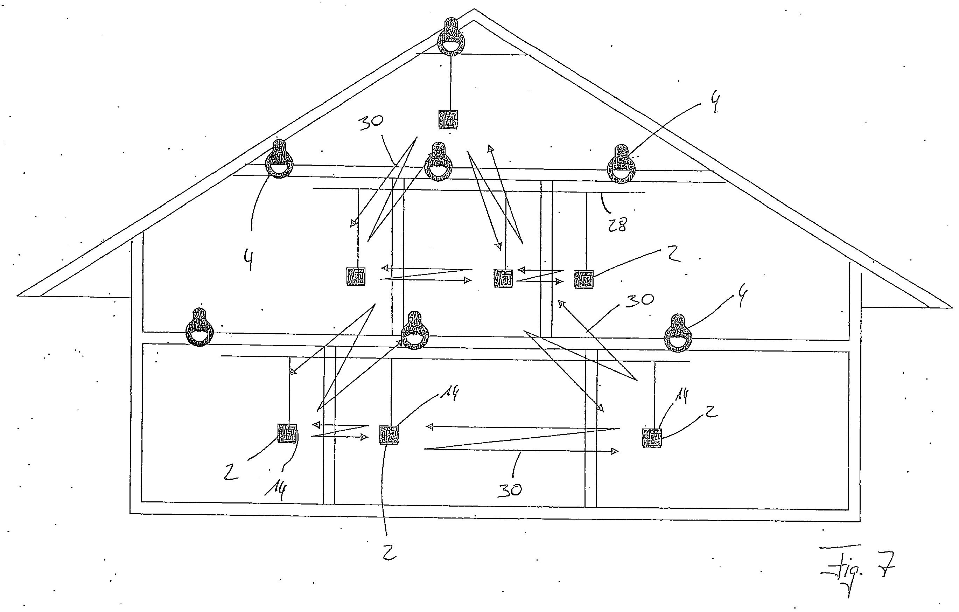

Wird nun am Umschaltelement 14 die Bedieneinrichtung 1 von dem Aufzeichnungsmodus in den Bedienmodus umgeschaltet, beginnt die Leuchtdiode 16 zu leuchten. Ein Umschaltsignal wird von dem Umschaltelement 14 an die elektrisehe Steuereinheit 6 gesendet, die über die Uhr 10 einen Wechselzeitpunkt innerhalb des Speicher-Zeitintervalls zuordnet. Von diesem Moment an werden Bediendaten nicht mehr in der Speichereinrichtung 12 gespeichert, sondern aus ihr ausgelesen. Über einen Vergleich der gespeicherten Zeitdaten in der Speichereinrichtung 12 mit der aktuellen Uhrzeit der inneren Uhr 10 kann bestimmt werden, zu welchem Zeitpunkt das Bedienelement 2 wie betätigt werden muss, um das in den Fig. 6 und 7 gezeigte elektrische Gerät 4 zu bedienen.

Umschaltsignale vom Umschaltelement 14, mit denen die Bedieneinrichtung 1 vom Aufzeichnungsmodus in den Bedienmodus oder umgekehrt umgeschaltet wird, werden von der elektrischen Steuereinheit 6 zu einer Kommunikationseinheit in Form einer Sende- und Empfängereinheit 18 übermittelt. Diese übermittelt ein entsprechendes Signal an andere Sender- und Empfängereinheiten anderer Bedieneinrichtungen 1 oder anderer Teile der gleichen Bedieneinrichtung 1, um so auch andere Bedienelemente 2 durch die jeweilige elektrische Steuereinheit 6 bedienen zu können.

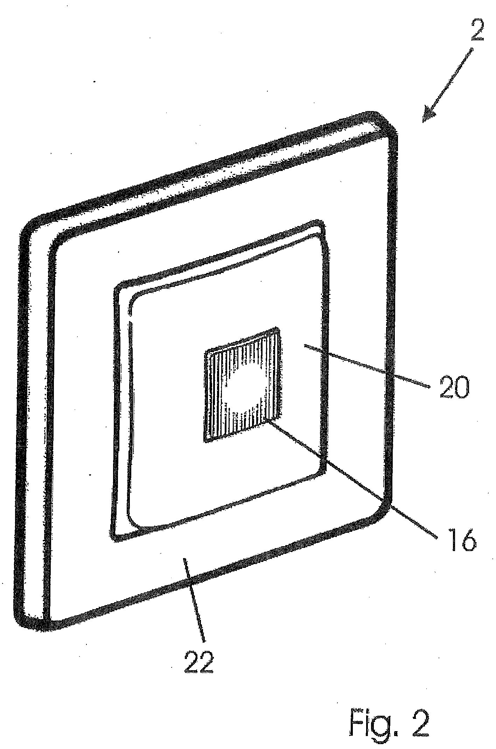

Figur 2 zeigt ein Bedienelement 2, das als Lichtschalter ausgebildet ist. Es verfügt über eine Wippe 20, die zum Bedienen des nicht gezeigten elektrischen Gerätes 4 vorgesehen ist. In der Mitte der Wippe 20 befindet sich die Leuchtdiode 16, die im in Figur 2 gezeigten Zustand leuchtend dargestellt ist, so dass sich bei der gezeigten Ausführungsform der Bedieneinrichtung 1 diese im Bedienmodus befindet. Wie herkömmliche Lichtschalter auch ist die Wippe 20 von einer Abdeckung 22 umgeben.

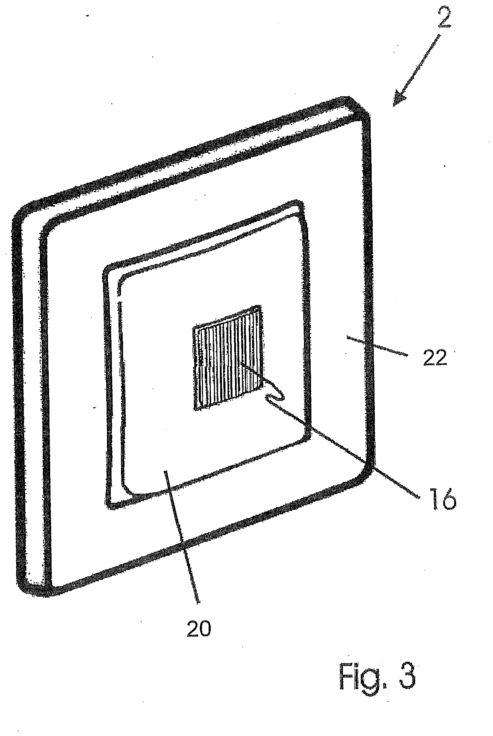

Figur 3 zeigt die Darstellung aus Figur 2, wobei sich nun die Leuchtdiode 16 im nicht leuchtenden Zustand befindet, so dass die Bedieneinrichtung im Aufzeichnungsmodus betrieben wird.

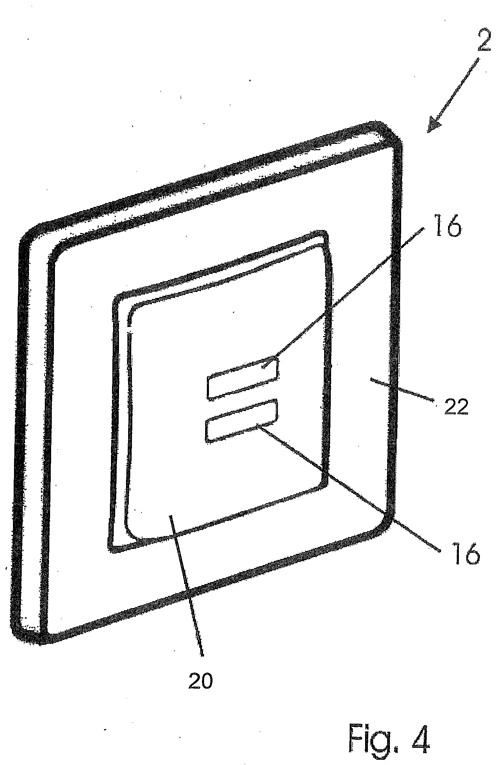

Figur 4 zeigt eine alternative Ausgestaltung eines Bedienelementes 2, bei der zwei Leuchtdioden 16 vorgesehen sind, durch die angezeigt werden kann, ob sich die Bedieneinrichtung 1 im Aufzeichnungsmodus oder im Bedienmodus befindet.

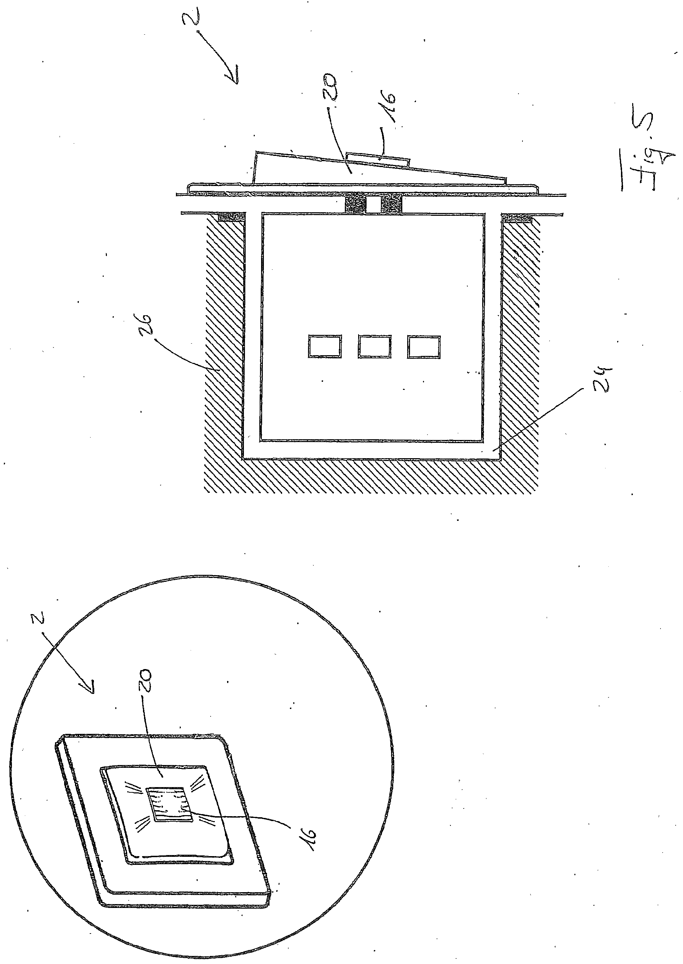

Figur 5 zeigt im linken Abschnitt wieder das Bedienelement 2 mit der Wippe 20 und der leuchtenden LED 16. Im rechten Anteil ist dargestellt, dass das Bedienelement 2 eine Unterputzdose 24 umfasst, die in eine Wand 26 eingelassen ist. Die Unterputzdose 24 hat dabei vorteilhafterweise die gleichen Ausdehnungen, wie herkömmliche Unterputzdosen, so dass bestehende Gebäude einfach mit einer Bedieneinrichtung 1 mit derartigen Bedienelementen 2 nachgerüstet werden kann.

Figur 6 zeigt im linken Bereich wieder das Bedienelement 2 aus Figur 5, das in dem im rechten Teil gezeigten Haus angeordnet ist. Man erkennt verschiedene Räume, in denen jeweils ein Bedienelement 2 vorhanden ist. Die Bedienelemente 2 sind alle als Lichtschalter ausgebildet, durch die elektrische Geräte 4 bedienbar sind. Dies sind Lampen, die in den einzelnen Zimmern des gezeigten Gebäudes angeordnet sind.

Figur 7 zeigt eine schematische Schnittdarstellung durch ein derartiges Gebäude. Die einzelnen Bedienelemente 2 zum Bedienen der elektrischen Geräte 4 sind über Stromverbindungen 28 mit den elektrischen Geräten 4 verbunden, so dass die Geräte 4 durch die Bedienelemente 2 bedient werden können. Durch die gezackten Doppelpfeile 30 wird dargestellt, dass die einzelnen Bedienelemente 2 über die Sende- und Empfängereinheiten 18 verfügen, so dass sie miteinander in Kontakt treten können. An jedem der Bedienelemente 2 ist ein Umschaltelement 14 vorgesehen, mit dem die Bedieneinrichtung 1 zwischen dem Aufzeichnungsmodus und dem Bedienmodus umgeschaltet werden kann. Sobald dies bei einem der Bedienelemente 2 geschieht, werden Signale über die Sende- und Empfängereinheit 18 von diesem Bedienelement 2 ausgesandt und von den übrigen Bedienelementen 2 empfangen, so dass auch diese in den jeweiligen neuen Modus umgeschaltet werden können.

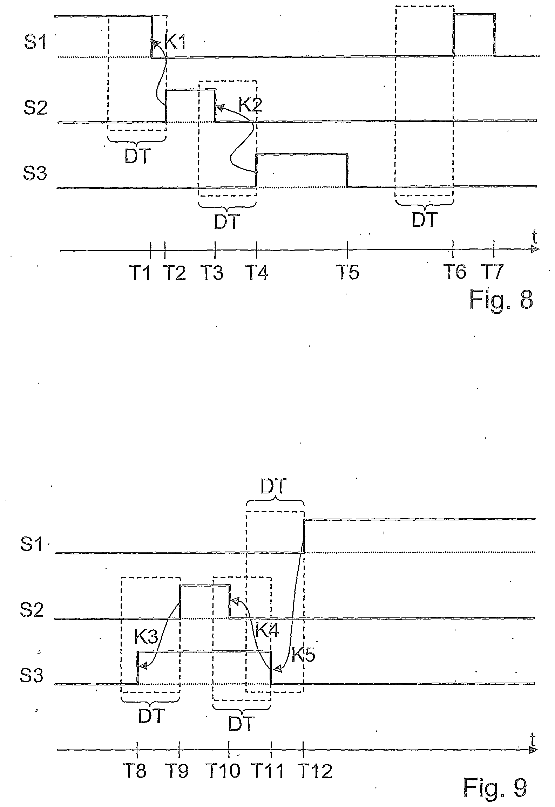

In den Figuren 8 und 9 werden bestimmte zeitliche Abläufe von Schalterbetätigungen, d.h. Schaltsequenzen, von Schaltern S1, S2 und S3 zu unterschiedlichen Tageszeiten dargestellt, z.B. Figur 8 am Abend und Figur 9 am Morgen eines Tages. Der Schalter S1 kann z.B. der Lichtschalter für das Wohnzimmer eines Hauses sein, der Schalter S2 der Lichtschalter für das Bad und der Schalter S3 der Lichtschalter für das Schlafzimmer.

Wie in Figur 8 erkennbar ist, wird zu einem bestimmten Zeitpunkt T1 zunächst der Schalter S1 ausgeschaltet. Kurz danach wird der Schalter S2 eingeschaltet (Zeitpunkt T2) und bleibt für eine bestimmte Zeit eingeschaltet. Er wird dann wieder ausgeschaltet (Zeitpunkt T3). Wiederum kurz danach wird der Schalter S3 eingeschaltet (Zeitpunkt T4) und nach einer gewissen Zeit wieder ausgeschaltet (Zeitpunkt T5). Nach einer etwas längeren Zeitdauer wird der Schalter S1 eingeschaltet (Zeitpunkt T6) und nach einer gewissen Zeit wieder ausgeschaltet (Zeitpunkt T7). Es sei angenommen, dass alle Schalter S1, S2 und S3 als erfindungsgemäße elektrische Bedieneinrichtung ausgebildet sind. Dementsprechend kommunizieren sie miteinander und suchen nach Koinzidenzen zu Schaltvorgängen anderer elektrischer Bedieneinrichtungen. Um eine Koinzidenz zu erkennen, wird von jedem Schalter S1, S2, S3 ein gewisser Zeitraum, der auch als Zeitdifferenzgrenzwert oder Zeitfenster DT bezeichnet werden kann, in der Vergangenheit eines eigenen Bedienereignisses gespeichert und überwacht. Diese Zeitfenster DT sind in den Figuren 8 und 9 durch gestrichelte Rechtecke wiedergegeben.

Der Schalter S2 bzw. die Steuereinheit von dessen elektrischer Bedieneinrichtung erkennt, dass der Schalter S1 innerhalb des Zeitfensters vor dem eigenen Einschalten ausgeschaltet wurde. Durch diese Erkennung besteht möglicherweise eine Koinzidenz zwischen den Schaltvorgängen der Schalter S1 und S2 im Zeitbereich T1/T2. Eine Koinzidenz kann aber nicht bereits nach einem einmaligen Vorgang zuverlässig erkannt werden. Der Schalter S2 speichert daher zunächst für diese Schaltsequenz einen Eigenbediendatensatz und einen Fremdbediendatensatz, der Daten über die Art der Schaltsequenz (S1 aus, S2 an) sowie über die Zeitdifferenz zwischen diesen Bedienereignissen und die Tageszeit aufweist. Tritt nun an weiteren, insbesondere an aufeinanderfolgenden Tagen zur im Wesentlichen gleichen Tageszeit eine vergleichbare Schaltsequenz zwischen den Schaltern S1, S2 auf, so wird dies vom Schalter S2 wiederum registriert und mittels eines Koinzidenz-Indikators vermerkt. Jeder auf diese Art zunächst vermuteten Koinzidenz kann ein solcher Koinzidenz-Indikator zugeordnet werden. Er wird mit jedem erneuten Auftreten einer vermuteten Koinzidenz erhöht, so dass nach einiger Zeit die Vermutung ggf. bestätigt werden kann. Der Koinzidenz-Indikator kann z.B. als Zähler ausgebildet sein. Erreicht der Zähler einen gewissen Mindest-Zählerstand, so wird die bis dahin vermutete Koinzidenz als tatsächlich existierend übernommen und als im Automatikmodus auszuführende erkannte Koinzidenz K1 im Schalter S2 gespeichert.

In vergleichbarer Weise erkennt der Schalter S3, dass regelmäßig abends vor seinem Einschaltereignis zum Zeitpunkt T4 der Schalter S2 innerhalb des Zeitfensters DT ausgeschaltet wird. Es wird nach entsprechend häufigem Auftreten dieser Schaltsequenz durch den Schalter S3 eine Koinzidenz K2 erkannt.

Eine Koinzidenz zwischen den Schaltereignissen an den Zeitpunkten T5, T6 wird nicht erkannt, weil diese Zeitpunkte zu weit auseinander liegen, d.h. nicht innerhalb des Zeitfensters DT.

Im Automatikmodus werden die erkannten Koinzidenzen K1, K2 verwendet, um automatisch Lichteinschalt- und Lichtausschaltsignale zu erzeugen, d.h. allgemein gesprochen Bediensignale an das elektrische Gerät abzugeben. In der Sequenz gemäß Figur 8 nimmt für die Koinzidenzen K1, K2 der Schalter S1 die führende Rolle ein. Erzeugt der Schalter S1 im Automatikmodus z.B. aufgrund eines eingelernten Zeitverhaltens abends automatisch ein Ausschaltsignal, so erkennt dies der Schalter S2 und weiß aufgrund der Koinzidenz K1, dass er kurz danach ein Einschaltsignal an sein elektrisches Gerät abgeben muss. Erzeugt der Schalter S2 aufgrund des eingelernten Zeitverhaltens nach kurzer Zeit automatisch ein Ausschaltsignal, so erkennt der Schalter S3 aufgrund der Koinzidenz K2, dass er kurz danach ein Einschalt-Bediensignal abgeben muss.

Bei der Schaltsequenz gemäß Figur 9 wird der Schalter S3 zuerst eingeschaltet (Zeitpunkt T8). Kurz danach wird der Schalter S2 eingeschaltet (Zeitpunkt T9), während S3 noch eingeschaltet ist. Dies erfolgt innerhalb des Zeitfensters DT. Entsprechend wird nach häufigerer Ausführung die Koinzidenz K3 erkannt. Als nächstes Ereignis wird der Schalter S2 wieder ausgeschaltet (Zeitpunkt T10). Kurz danach wird S3 ausgeschaltet (Zeitpunkt T11). Dies erfolgt innerhalb des Zeitfensters DT, so dass nach entsprechend häufiger Ausführung die Koinzidenz K4 erkannt wird. Nach dem Ausschalten von S3 wird innerhalb des Zeitfensters DT S1 eingeschaltet (Zeitpunkt T12). Nach entsprechend häufiger Ausführung wird die Koinzidenz K5 erkannt.

Wie ersichtlich ist, können somit dieselben Schalter S1, S2 und S3 zu einer anderen Tageszeit eine andere Schaltsequenz bzw. eine andere Reihenfolge von Koinzidenzen erkennen und im Automatikmodus ausführen. Im Beispiel gemäß Figur 9 nimmt der Schalter S3 die führende Rolle ein. Wenn S3 zu gegebener Tageszeit gemäß Figur 9 im Automatikmodus ein Einschalt-Bediensignal abgibt, wird der Schalter S2 kurz danach aufgrund der erkannten Koinzidenz K3 ebenfalls ein Einschaltsignal abgeben und aufgrund angelernten Verhaltens kurz danach wieder ein Ausschaltsignal. Diesem folgt der Schalter S3 aufgrund der Koinzidenz K4, indem er ebenfalls als Bediensignal ein Ausschaltsignal abgibt. Hierauf folgt der Schalter S1 aufgrund der Koinzidenz K5 mit einem Einschaltsignal.

## Patentansprüche

1. Elektrische Bedieneinrichtung (1) zur elektrischen Bedienung wenigstens eines elektrischen Geräts (4), aufweisend wenigstens ein manuell zu betätigendes Bedienelement (2) und wenigstens eine programmgesteuerte Steuereinheit (6), die wenigstens einen Lernmodus und wenigstens einen Automatikmodus aufweist, wobei die Steuereinheit (6) dazu eingerichtet ist, in dem Lernmodus manuelle Betätigungen des Bedienelements (2) durch Benutzer zu erfassen und mit einem ebenfalls erfassten, der jeweiligen manuellen Betätigung zugeordneten Zeitpunkt als Eigenbediendatensatz zu speichern und in dem Automatikmodus automatisch Bediensignale zu erzeugen und an das elektrische Gerät (4) auszugeben, die von der Steuereinheit (6) aufgrund der im Lernmodus gespeicherten Eigenbediendatensätze bestimmt sind, **dadurch gekennzeichnet, dass** die Bedieneinrichtung (1) ferner wenigstens eine Kommunikationseinheit (18) aufweist, über die die Bedieneinrichtung (1) Daten mit anderen Bedieneinrichtungen (1) austauschen kann, wobei die Steuereinheit (6) dazu eingerichtet ist, Bediendaten anderer Bedieneinrichtungen (1) über die Kommunikationseinheit (18) zu empfangen und zu erfassen und mit einem ebenfalls erfassten, der jeweiligen manuellen Betätigung zugeordneten Zeitpunkt als Fremdbediendatensatz zu speichern, wobei die Steuereinheit (6) ferner dazu eingerichtet ist, Koinzidenzen zwischen den Eigenbediendatensätzen und den Fremdbediendatensätzen zu erkennen und im Automatikmodus die Bediensignale in Abhängigkeit von einer oder mehreren erkannten Koinzidenzen zu erzeugen.

2. Bedieneinrichtung nach dem vorhergehenden Anspruch, **dadurch gekennzeichnet, dass** die Steuereinheit (6) dazu eingerichtet ist, Koinzidenzen zwischen den Eigenbediendatensätzen und den Fremdbediendatensätzen zu erkennen, bei denen der Zeitpunkt des Fremdbediendatensatzes vor dem Zeitpunkt des Eigenbediendatensatzes liegt.

3. Bedieneinrichtung nach einem der vorhergehenden Ansprüche, **dadurch gekennzeichnet, dass** die Steuereinheit (6) dazu eingerichtet ist, nur Zeitdifferenzen zwischen den Zeitpunkten von auf Vorliegen einer Koinzidenz untersuchten Paaren von Eigenbediendatensätzen und Fremdbediendatensätzen als Indiz für eine Koinzidenz auszuwerten, die kleiner als ein vorgegebener Zeitdifferenzgrenzwert (DT) sind.

4. Bedieneinrichtung nach einem der vorhergehenden Ansprüche, **dadurch gekennzeichnet, dass** die Steuereinheit (6) dazu eingerichtet ist, die ausgegebenen Bediensignale zusätzlich zeitlich zufallsabhängig oder mit einem vorgegebenen Zeitmuster zu variieren.

5. Bedieneinrichtung nach einem der vorhergehenden Ansprüche, **dadurch gekennzeichnet, dass** die Steuereinheit (6) dazu eingerichtet ist, selbständig den Automatikmodus zu aktivieren, wenn für eine vorbestimmte Mindestzeit keine manuelle Betätigung des Bedienelements (2) der Bedieneinrichtung (1) erkannt wurde.

6. Bedieneinrichtung nach einem der vorhergehenden Ansprüche, **dadurch gekennzeichnet, dass** die Steuereinheit (6) dazu eingerichtet ist, Koinzidenzen mit einem Bezug zu einem Zeitzyklus, insbesondere tagesweise, wochenweise, monatsweise oder jahreszeitweise, zu erkennen und zu gruppieren und im Automatikmodus die ausgegebenen Bediensignale nur von solchen Koinzidenzen abhängig zu machen, deren Gruppierung dem aktuellen realen Zeitzyklus entsprechen.

7. Bedieneinrichtung nach einem der vorhergehenden Ansprüche, **dadurch gekennzeichnet, dass** die Bedieneinrichtung (1) als dezentrale Bedieneinrichtung zur Bildung eines dezentralen Systems von Bedieneinrichtungen ausgebildet ist, das ohne zentrale Steuereinheit funktionsfähig ist.

8. Dezentrales System mit mehreren Bedieneinrichtungen (1) gemäß einem der vorhergehenden Ansprüche, die über ein Kommunikationsmedium (28) gekoppelt sind, über das die Bedieneinrichtungen (1) mittels ihrer Kommunikationseinheiten (18) Daten miteinander austauschen können.

9. Verfahren zur elektrischen Bedienung wenigstens eines elektrischen Geräts (4) mittels einer elektrischen Bedieneinrichtung (1), aufweisend wenigstens ein manuell zu betätigendes Bedienelement (2) und wenigstens eine programmgesteuerte Steuereinheit (6), die wenigstens einen Lernmodus und wenigstens einen Automatikmodus aufweist, wobei die Steuereinheit (6) in dem Lernmodus manuelle Betätigungen des Bedienelements (2) durch Benutzer erfasst und mit einem ebenfalls erfassten, der jeweiligen manuellen Betätigung zugeordneten Zeitpunkt als Eigenbediendatensatz speichert und in dem Automatikmodus automatisch Bediensignale erzeugt und an das elektrische Gerät (4) ausgibt, die von der Steuereinheit (6) aufgrund der im Lernmodus gespeicherten Eigenbediendatensätze bestimmt werden, **dadurch gekennzeichnet, dass** die Bedieneinrichtung (1) ferner wenigstens eine Kommunikationseinheit (18) aufweist, über die die Bedieneinrichtung (1) Daten mit anderen Bedieneinrichtungen (1) austauscht, wobei die Steuereinheit (6) Bediendaten anderer Bedieneinrichtungen (1) über die Kommunikationseinheit (18) empfängt und erfasst und mit einem ebenfalls erfassten, der jeweiligen manuellen Betätigung zugeordneten Zeitpunkt als Fremdbediendatensatz speichert, wobei die Steuereinheit (6) ferner Koinzidenzen zwischen den Eigenbediendatensätzen und den Fremdbediendatensätzen erkennt und im Automatikmodus die Bediensignale in Abhängigkeit von einer oder mehreren erkannten Koinzidenzen erzeugt.

10. Computerprogramm mit Programmcodemitteln, eingerichtet zur Durchführung des Verfahrens nach dem vorhergehenden Anspruch, wenn das Computerprogramm auf einem Rechner (7) einer Steuereinheit (6) einer Bedieneinrichtung (1) ausgeführt wird.

## Claims

1. Electrical operating device (1) for electrically operating at least one electrical device (4), having at least one operating element (2) which can be manually actuated and at least one program-controlled control unit (6) having at least one learning mode and at least one automatic mode, the control unit (6) being set up to capture manual actuations of the operating element (2) by users in the learning mode and to store them with a time, which is likewise captured and is assigned to the respective manual actuation, as an internal operating data record and to automatically generate operating signals in the automatic mode and to output them to the electrical device (4), which operating signals are determined by the control unit (6) on the basis of the internal operating data records stored in the learning mode, **characterized in that** the operating device (1) also has at least one communication unit (18), via which the operating device (1) can interchange data with other operating devices (1), the control unit (6) being set up to receive and capture operating data from other operating devices (1) via the communication unit (18) and to store them with a time, which is likewise captured and is assigned to the respective manual actuation, as an external operating data record, the control unit (6) also being set up to identify coincidences between the internal operating data records and the external operating data records and to generate the operating signals in the automatic mode on the basis of one or more identified coincidences.

2. Operating device according to the preceding claim, **characterized in that** the control unit (6) is set up to identify coincidences between the internal operating data records and the external operating data records in which the time of the external operating data record is before the time of the internal operating data record.

3. Operating device according to one of the preceding claims, **characterized in that** the control unit (6) is set up to evaluate only time differences between the times of pairs of internal operating data records and external operating data records investigated for the presence of a coincidence, which are smaller than a predefined time difference limit value (DT), as an indication of a coincidence.

4. Operating device according to one of the preceding claims, **characterized in that** the control unit (6) is set up to additionally vary the output operating signals in a temporally random manner or with a predefined time pattern.

5. Operating device according to one of the preceding claims, **characterized in that** the control unit (6) is set up to independently activate the automatic mode if manual actuation of the operating element (2) of the operating device (1) has not been detected for a predetermined minimum time.

6. Operating device according to one of the preceding claims, **characterized in that** the control unit (6) is set up to identify and group coincidences with a reference to a time cycle, in particular on a daily basis, on a weekly basis, on a monthly basis or on a seasonal basis, and, in the automatic mode, to make the output operating signals dependent only on those coincidences whose grouping corresponds to the current actual time cycle.

7. Operating device according to one of the preceding claims, **characterized in that** the operating device (1) is in the form of a decentralized operating device for forming a decentralized system of operating devices which is functional without a central control unit.

8. Decentralized system having a plurality of operating devices (1) according to one of the preceding claims which are coupled via a communication medium (28), via which the operating devices (1) can interchange data with one another by means of their communication units (18).

9. Method for electrically operating at least one electrical device (4) by means of an electrical operating device (1) having at least one operating element (2) which can be manually actuated and at least one program-controlled control unit (6) having at least one learning mode and at least one automatic mode, the control unit (6) capturing manual actuations of the operating element (2) by users in the learning mode and storing them with a time, which is likewise captured and is assigned to the respective manual actuation, as an internal operating data record and automatically generating operating signals in the automatic mode and outputting them to the electrical device (4), which operating signals are determined by the control unit (6) on the basis of the internal operating data records stored in the learning mode, **characterized in that** the operating device (1) also has at least one communication unit (18), via which the operating device (1) interchanges data with other operating devices (1), the control unit (6) receiving and capturing operating data from other operating devices (1) via the communication unit (18) and storing them with a time, which is likewise captured and is assigned to the respective manual actuation, as an external operating data record, the control unit (6) also identifying coincidences between the internal operating data records and the external operating data records and generating the operating signals in the automatic mode on the basis of one or more identified coincidences.

10. Computer program having program code means set up to carry out the method according to the preceding claim when the computer program is executed on a computer (7) of a control unit (6) of an operating device (1).

## Revendications

1. Dispositif de commande électrique (1) pour la commande électrique d'au moins un dispositif électrique (4), comportant au moins un élément de commande (2) actionné manuellement et au moins une unité de commande (6) commandée par programme qui présente au moins un mode d'apprentissage et au moins un mode automatique, dans lequel l'unité de commande (6) est conçue pour détecter, en mode d'apprentissage, les actionnements manuels de l'élément de commande (2) par des utilisateurs et pour les mémoriser en tant que jeu de données de commande propre avec un temps également détecté et associé à l'actionnement manuel correspondant, et pour générer automatiquement, en mode automatique, des signaux de commande et les délivrer à l'appareil électrique (4), lesquels signaux sont déterminés par l'unité de commande (6) sur la base des jeux de données de commande propres mémorisés en mode d'apprentissage, **caractérisé en ce que** le dispositif de commande (1) comprend en outre au moins une unité de communication (18) par l'intermédiaire de laquelle le dispositif de commande (1) peut échanger des données avec d'autres dispositifs de commande (1), dans lequel l'unité de commande (6) est conçue pour recevoir et détecter des données de commande d'autres dispositifs de commande (1) par l'intermédiaire de l'unité de communication (18) et pour les mémoriser en tant que jeu de données de commande externe avec un temps également mémorisé et associé à l'actionnement manuel respectif, dans lequel l'unité de commande (6) est en outre conçue pour reconnaître des coïncidences entre les jeux de données de commande propres et les jeux de données de commande externes et pour générer en mode automatique les signaux de commande en fonction d'une ou plusieurs coïncidences reconnues.

2. Dispositif de commande selon la revendication précédente, **caractérisé en ce que** l'unité de commande (6) est conçue pour reconnaître des coïncidences entre les jeux de données de commande propres et les jeux de données de commande externes, pour lesquelles le temps du jeu de données de commande externe est antérieur au temps du jeu de données de commande propre.

3. Dispositif de commande selon l'une des revendications précédentes, **caractérisé en ce que** l'unité de commande (6) est conçue pour n'évaluer, comme étant l'indication d'une coïncidence, que les différences de temps, entre les temps de paires d'ensembles de données de commande propres et d'ensembles de données de commande externes examinés pour déceler la présence d'une coïncidence, qui sont inférieures à une valeur limite de différence de temps prédéterminée (DT).

4. Dispositif de commande selon l'une des revendications précédentes, **caractérisé en ce que** l'unité de commande (6) est en outre conçue pour faire varier de manière aléatoire ou selon un profil temporel prédéterminé les signaux de commande délivrés.

5. Dispositif de commande selon l'une des revendications précédentes, **caractérisé en ce que** l'unité de commande (6) est conçue pour activer indépendamment le mode automatique si aucun actionnement manuel de l'élément de commande (2) du dispositif de commande (1) n'a été reconnu pendant une durée minimale prédéterminée.

6. Dispositif de commande selon l'une des revendications précédentes, **caractérisé en ce que** l'unité de commande (6) est conçue pour reconnaître et regrouper des coïncidences ayant une référence à un cycle temporel, en particulier par jour, par semaine, par mois ou par saison, et pour faire en sorte, en mode automatique, que les signaux de commande délivrés dépendent uniquement des coïncidences dont le regroupement correspond au cycle temporel réel actuel.

7. Dispositif de commande selon l'une des revendications précédentes, **caractérisé en ce que** le dispositif de commande (1) est réalisé sous la forme d'un dispositif de commande décentralisé destiné à constituer un système décentralisé de dispositifs de commande, qui est apte à fonctionner sans unité centrale de commande.

8. Système décentralisé comprenant une pluralité de dispositifs de commande (1) selon l'une des revendications précédentes, qui sont couplés par l'intermédiaire d'un support de communication (28) au moyen duquel les dispositifs de commande (1) peuvent échanger des données entre eux au moyen de leurs unités de communication (18).

9. Procédé pour la commande électrique d'au moins un appareil électrique (4) au moyen d'un dispositif de commande électrique (1), comportant au moins un élément de commande (2) actionné manuellement et au moins une unité de commande (6) commandée par programme, qui présente au moins un mode d'apprentissage et au moins un mode automatique, dans lequel l'unité de commande (6), en mode d'apprentissage, détecte des actionnements manuels de l'élément de commande (2) par l'utilisateur et les mémorise avec un temps également détecté et associé à l'actionnement manuel respectif, en tant que jeu de données de commande propre et, en mode automatique, génère automatiquement des signaux d'actionnement et les délivre à l'appareil électrique (4), lesquels signaux d'actionnement sont déterminés par l'unité de commande (6) en mode d'apprentissage sur la base des jeux de données de commande propres, **caractérisé en ce que** le dispositif de commande (1) comporte en outre au moins une unité de communication (18) par l'intermédiaire de laquelle le dispositif de commande (1) échange des données avec d'autres dispositifs de commande (1), dans lequel l'unité de commande (6) reçoit des données de commande d'autres dispositifs de commande (1) par l'intermédiaire de l'unité de communication (18) et les détecte et les mémorise en tant que jeu de données de commande externe avec un temps également enregistré et associé à l'actionnement manuel respectif, dans lequel l'unité de commande (6) reconnaît en outre des coïncidences entre les jeux de données de commande propres et les jeux de données de commande externes, et génère en mode automatique les signaux de commande en fonction d'une ou plusieurs coïncidences reconnues.

10. Programme d'ordinateur comportant des moyens de codage de programme conçus pour mettre en oeuvre le procédé selon la revendication précédente lorsque le programme d'ordinateur est exécuté sur un ordinateur (7) d'une unité de commande (6) d'un dispositif de commande (1) .
